# EUROPEAN PATENT APPLICATION

(11) **EP 1 393 935 A1**
(43) Date of publication of application: **03.03.2004**
(21) Application number: 02078551.5
(22) Date of filing: 29.08.2002
(51) Int. Cl.: B60G 3/24, B60G 3/26, B60K 17/30, B60K 17/22, B62D 49/06

(54) **Suspended articulated powered front axle for vehicles, in particular tractors**

(71) Applicant: CNH Italia S.p.A., 41100 Modena (IT)
(72) Inventor: Bordini, Giorgio, 38003 Santa Cruz de Tenerife (ES)
(74) Representative: Vandenbroucke, Alberic T.J.

(57) **Abstract**

A suspended articulated front axle (Pa) for vehicles (T2), in particular farm tractors (T2), wherein each axle shaft (S1', S2') has at least one portion (17a) whose longitudinal axis of symmetry (k) slopes by a sweepback angle (f) with respect to a line (t') perpendicular to the longitudinal axis of symmetry (s') of the vehicle (T2); the sweepback angle (f) being such that the outer end of the sloping portion (17a) is located further back than the inner end of the portion (17a) in the common forward traveling direction of the vehicle (T2).

## Description

The present invention relates to a suspended articulated powered front axle for vehicles, in particular tractors.

In the following description, the axle is referred to as a "powered front axle" by being that by which the tractor is given motion. As will be seen, as opposed to being rigid, such an axle is articulated by means of a deformable system, and has suspension devices to which are transmitted part of the mass of the tractor and the internal and external stresses exchanged between the tractor and ground via the front wheels.

In the farm tractor industry, solutions comprising an articulated powered axle, in turn comprising suspension devices, are known.

In one particular known solution, to reduce the turning radius of the tractor, all other conditions being the same, the wheelbase, i.e. the distance between the front and rear axle, is reduced.

A major drawback of reducing the wheelbase, while maintaining the conventional front axle structure with parallel axle shafts, however, lies in the front axle having to be hinged further back to the supporting structure, so that it is located directly beneath the engine. As a result, the engine shafting, and hence the drive train as a whole, must be raised, thus also raising the center of gravity, and impairing the stability, of the tractor; and all the stress from the powered axle is transmitted to the engine block and sump, as opposed to the front bearing designed to support the front axle. In this known solution, the problem of raising the engine is further compounded by the differential casing also having to be located beneath the drive shaft. This type of steering system, which is already marketed, is described in more detail later on.

In the present invention, on the other hand, the problem of shortening the wheelbase to reduce the turning radius of the tractor is solved by a sweepback configuration of at least one portion of each axle shaft of the front axle; the term "sweepback" being intended to mean that the outer ends of the axle shafts are further back with respect to the inner ends in the common forward traveling direction of the tractor, so that the longitudinal axis of symmetry of each axle shaft forms an angle of other than zero with a line perpendicular to the longitudinal axis of symmetry of the tractor and through the axis of the front axle differential.

It is therefore an object of the present invention to provide a suspended articulated powered front axle for vehicles, in particular tractors, designed to eliminate the aforementioned drawbacks.

According to the present invention, there is provided a suspended articulated front axle, as defined in the alleged independent Claims.

A number of non-limiting embodiments of the present invention will be described by way of example with reference to the accompanying drawings, in which:
Figure 1a shows a known tractor front axle solution;
Figure 1b shows, schematically, a suspended articulated powered front axle for tractors, said front axle being the main object of the present invention;
Figure 1c shows the difference in position of the front wheels by reducing the wheelbase and providing sweepback;
Figure 2 shows a schematic exploded view of a portion of a first embodiment of the front axle according to the present invention;
Figure 3 shows a partial side view of the axle shown schematically in Figures 1b, 1c and 2;
Figure 4 shows a partial front view of the axle shown schematically in Figures 1b, 1c, 2 and 3;
Figure 5 shows a partial plan view of the axle shown schematically in Figure 4;
Figure 6 shows a view in perspective of a second embodiment of the present invention;
Figure 7 shows a partial side view of the second embodiment in Figure 6;
Figure 8 shows a partial front view of the second embodiment in Figure 6;
Figure 9 shows a partial plan view of the second embodiment in Figure 6;
Figure 10 shows the main elements of the second embodiment suspension mechanism;
Figure 11a shows the way a wheel in the prior art (Figure 1a) turns;
Figure 11b shows the way a wheel forming part of the innovative axle in Figures 1b-10 turns;
Figure 12 shows how the front wheels of the innovative axle in Figures 1b-10 self-align in the event either loses traction.

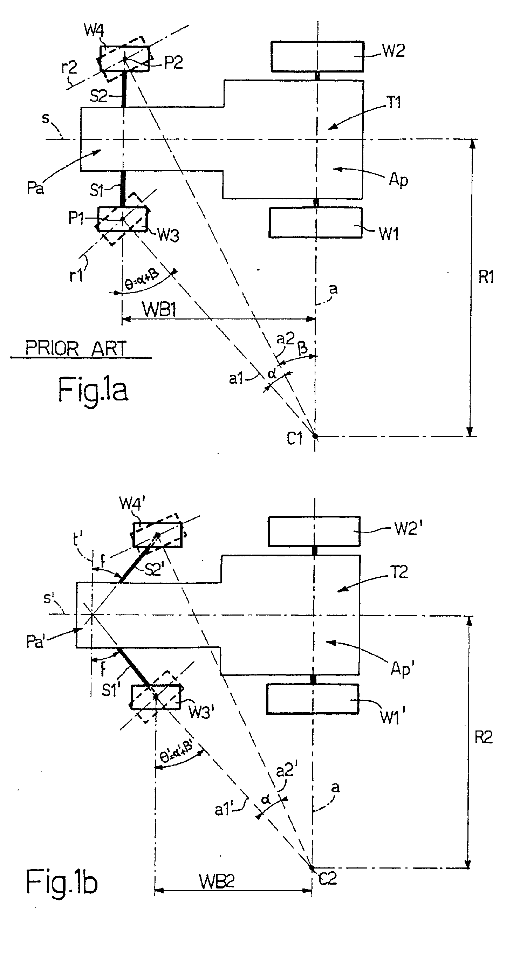

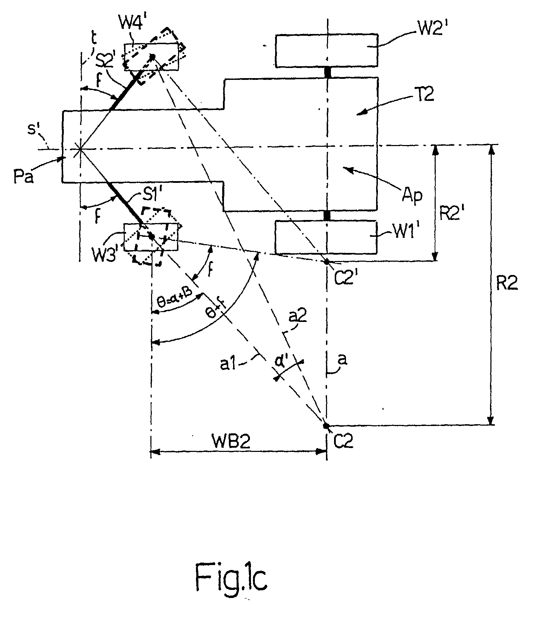

Figure 1a shows, schematically, a conventional tractor T1, in which steering is effected by a front axle Pa, and the instantaneous turning center C1 of tractor T1 is located along an axis (a) of a rear axle Ap comprising two non-direction wheels W1, W2. More specifically, instantaneous turning center C1 is defined as the point at which the projection of rear axis (a) in the horizontal plane (sheet plane) intersects the projections, in the horizontal plane, of the two axes (a1, a2) of the front wheels W3, W4 of front axle Pa. More specifically, axis (a1) is perpendicular to the centerline plane (r1) of wheel W3, and axis (a2) is perpendicular to the centerline plane (r2) of wheel W4, when wheels W3, W4 are in the maximum-turning position shown in Figure la.

As shown in Figure 1a, in actual fact, front wheel W3 turns about an axis through a point P1 on the centerline within wheel W3, and wheel W4 about an axis through a point P2 on the centerline within wheel W4. Wheels W3, W4 are turned by means of respective hydraulic actuators (not shown in Figure 1a).

The distance between the projections, in the horizontal plane (sheet plane), of the longitudinal axes of symmetry of the axle shafts of front wheels W3, W4 connected to front axle Pa, and of the longitudinal axis of symmetry of axle Ap of rear wheels W1, W2 defines the wheelbase WB1 of the body of tractor T1.

As shown in Figure 1a, front wheels W3, W4 have different turning angles. That is, axes (a1, a2) perpendicular to (r1, r2) form an angle (α) which is the maximum difference between the turning angles of wheels W3 and W4. In other words, the inside wheel W3 in the turn turns more than the outside wheel W4, which is known requirement for correct steering.

In fact, if (β) is the turning angle of wheel W4 (the "outside" wheel), (α+β) is the turning angle of wheel W3 (the "inside" wheel), so that axes (a1, a2) of wheels W3, W4 both converge at center C1 located, as stated, along axis (a) of rear axle Ap.

In conventional solutions, however, the maximum turning angle (θ=α+β) of the inside wheel W3 is limited by two major factors:
- the maximum angle permitted by the transmission joint (not shown in Figure 1a) between each wheel W3, W4 and respective axle shaft S1, S2; in other words, the maximum turning angle is imposed by the transmission device, and is roughly 50-55°;
- possible interference between wheels W3, W4 and the body of tractor T1 at high turning angles; for this reason, in some known embodiments, the body of tractor T1 is shortened to give wheels W3, W4 more space to turn; in others, as stated, to reduce the turning radius, wheelbase WB1 is shortened by moving front axle Pa closer to rear axle Ap, with all the aforementioned drawbacks this entails.

Figure 1b shows, schematically, the configuration of wheels W1', W2' of rear axle Ap', and wheels W3', W4' of front axle Pa' according to the present invention.

According to the present invention, a sweepback (f) provides for reducing the wheelbase from the WB1 value (Figure 1a) to a reduced value WB2 (Figure 1b), thus improving the turning performance of the body of the tractor T2.

In this context, "sweepback (f)" is intended to mean the angle formed by each axle shaft S1' S2' with a line (t') perpendicular to the longitudinal axis of symmetry (s') of the body of tractor T2.

Consequently, for a given maximum turning angle (i.e. when wheel W3' in Figure 1b is set to a configuration parallel to that of wheel W3 in Figure 1a), center C1 goes to center C2, and the turning radius from R1 to R2 (compare Figures 1a and 1b).

Moreover, as a result of sweepback (f) of axle shafts 31' and S2', for a given maximum angle permitted by the end joint of each axle shaft 31', S2', the inside wheel W3' can be turned by an angle equal to sweepback angle (f) plus the maximum angle (θ) permitted by the joint, so that the instantaneous turning center can be moved even closer to tractor T2, from C2 (Figure 1b) to C2', as shown in Figure 1c, thus further improving the turning performance of tractor T2.

As stated, the solution according to the present invention enables front axle Pa to be connected to the body portions of tractor T2 designed for the purpose, as opposed to being connected further back beneath the engine, with all the drawbacks this entails.

In the case of the present invention therefore (Figure 1c), whereas the inside wheel W3' can turn by a total maximum angle (θ'+f), where θ' has a maximum value of 50-55° (equal to α'+β'), the outside wheel W4' can turn at most by an angle (θ'-f), where θ' again has a maximum value of 50-55°.

Though this solution would appear to penalize the outside wheel W4', this, as we have seen, must always turn by a smaller angle than inside wheel W3'.

However, since the difference between the turning angles (α') of wheels W3' and W4' is inversely proportional to the wheelbase of tractor T2, and since the maximum permissible sweepback (fmax) can be shown to equal half angle (α'), the turning angle of the outside wheel W4' will be further reduced with respect to that of inside wheel W3'.

Therefore, when executing the sharpest turn, the inside wheel W3' turns at most by angle (θ'), imposed by the transmission device, plus sweepback angle (f), while the outside wheel W4' turns at most by angle (θ') minus sweepback angle (f), thus still meeting the conditions required for correct steering.

In other words, sweepback (f) reduces the turning radius of tractor T2 twofold, i.e.:
- a first reduction by reducing the wheelbase (from WB1 in Figure 1a to WB2 in Figure 1b) so that the turning radius goes from R1 in Figure 1a to R2 in Figure 1b; and
- a second reduction of the turning radius from R2 (Figure 1b to R2', as shown in Figure 1c; this being made possible by increasing the turning angle of inside wheel W3' from (9') (Figure 1b) to (θ'+f), where f may assume a maximum value of α'/2.

Turning by an increased angle (θ'+f) greater than (θ'), however, inside wheel W3' may interfere with the body of tractor T2.

The geometry of the suspensions of axle shafts S1', S2' must therefore be designed to prevent wheels W3' and W4', when turning, from coming so close to the body of tractor T2 in the potential interference area.

Exactly how this can be done by appropriately selecting the turning axis of each front wheel W3', W4' is described below.

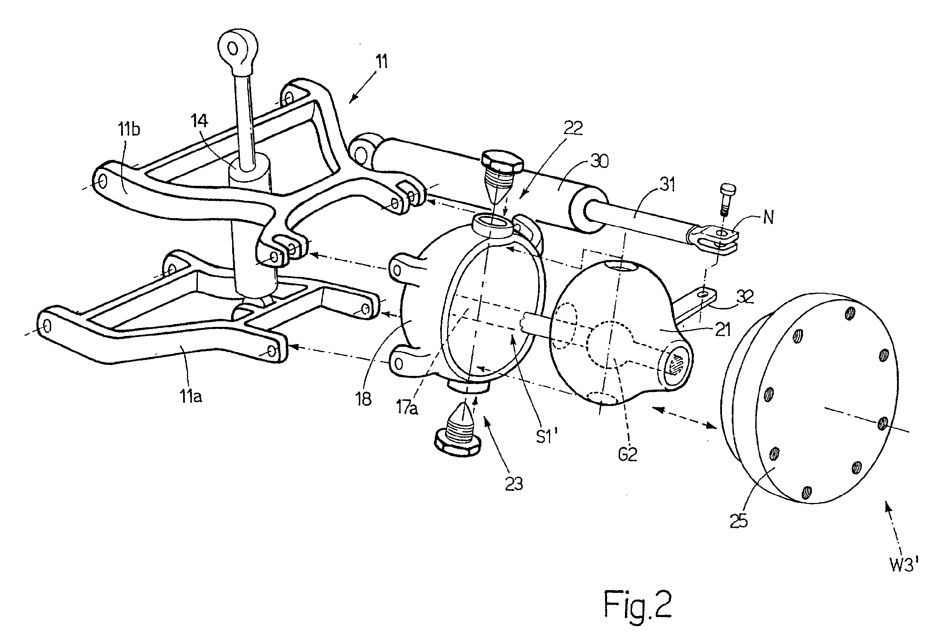

Figures 2-5 show a first embodiment of the present invention illustrating in detail the component parts of the system connecting wheel W3' to the body of tractor T2.

As stated with reference to Figures 1b and 1c, front axle Pa comprises two axle shafts S1 and S2' (only axle shaft S1' of wheel W3' is shown in Figures 2-5).

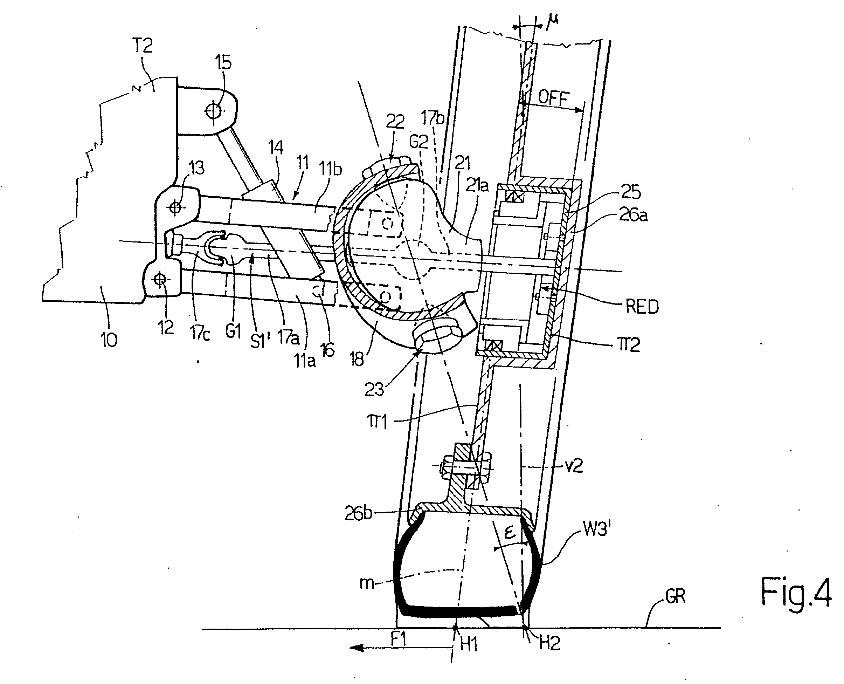

Axle shaft S1' is associated with a box body 10 (Figure 4) integral with the body of tractor T2, and to which is attached a suspension 11 comprising a bottom arm 11a and a top arm 11b.

Bottom arm 11a and top arm 11b are hinged to box body 10 by pins 12 and pins 13 respectively (Figure 4).

A hydraulic cylinder 14 is preferably, though not necessarily, hinged to bottom arm 11a to act as a shock-absorber or, more generally, to vary the stiffness of suspension 11. More specifically, hydraulic cylinder 14 is hinged to the body of tractor T2 by a pin 15 (Figure 4) and to bottom arm 11a by an articulated joint 16, and is connected to a hydraulic circuit (not shown) in the body of tractor T2.

Axle shaft S1' extends between arms 11a and 11b, and comprises a device having two universal joints G1, G2 and for transmitting motion from the differential casing (not shown), housed in box body 10, to wheel W3' (see below). More specifically, axle shaft S1' comprises an intermediate shaft 17a with universal joints G1, G2 on the ends (Figure 4); an outer shaft 17b extending from universal joint G2 to transmit motion to wheel W3' (see below); and an inner shaft 17c.

Box body 10 advantageously, though not necessarily, houses a device (not shown) for braking front wheels W3', W4'.

As shown in detail in Figures 2, 3 and 5, in this embodiment, arms 11a, 11b are advantageously each in the form of a double fork, and support a substantially cup-shaped articulated support 18 to which the ends of arms 11a, 11b are hinged by pins 19a, 19b and pins 20a, 20b respectively.

Articulated support 18 is shaped to house a hub carrier 21, in turn supporting a hub 25 (Figures 2, 4 and 5) of wheel W3' by means described in detail later on.

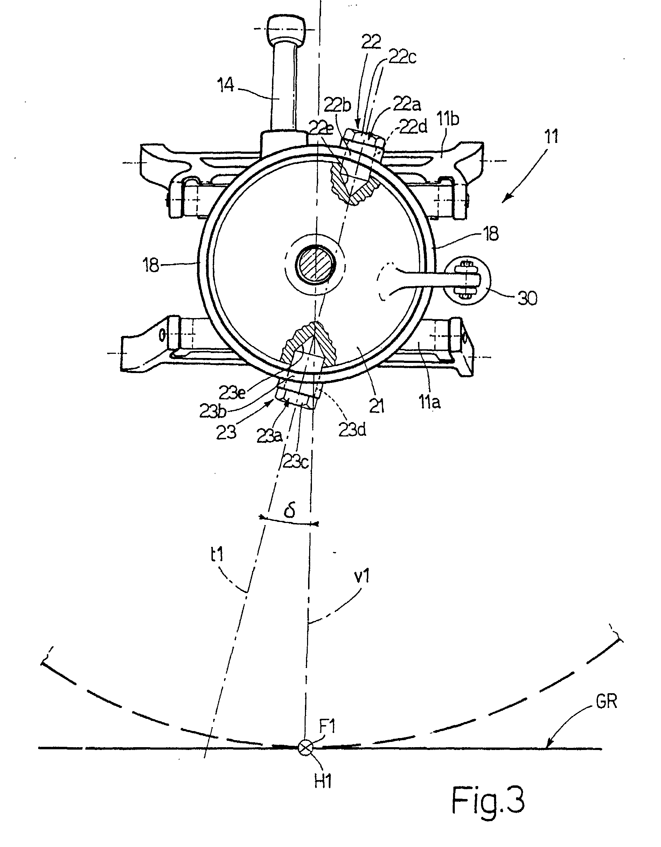

Hub carrier 21 is supported inside the cup-shaped articulated support 18 by means of two hinges 22, 23, each defined by the union of two substantially ogival male-female members (Figure 3). More specifically, the male member 22a, 23a of each hinge 22, 23 is housed partly inside a through seat 22b, 23b formed in the body of articulated support 18, and is fixed to the body of articulated support 18 by a threaded nut 22c, 23c screwed to a threaded shank 22d, 23d (Figure 3).

Hub carrier 21 in turn comprises two ogival female cavities 22e, 23e for receiving respective ogival portions of male members 22a, 23a of hinges 22, 23.

Hub carrier 21 is normally cast, and, as shown in Figure 4, comprises, in the portion facing wheel W3', a through hole 21a for the passage of outer shaft 17b of axle shaft S1', which, as stated, transmits motion to wheel W3'.

For this purpose, outer shaft 17b is connected (by known means) to hub 25, which is fitted with a disk 26a of wheel W3'.

A portion of outer shaft 17b extends inside hub 25, which may house the component parts of a reducer RED.

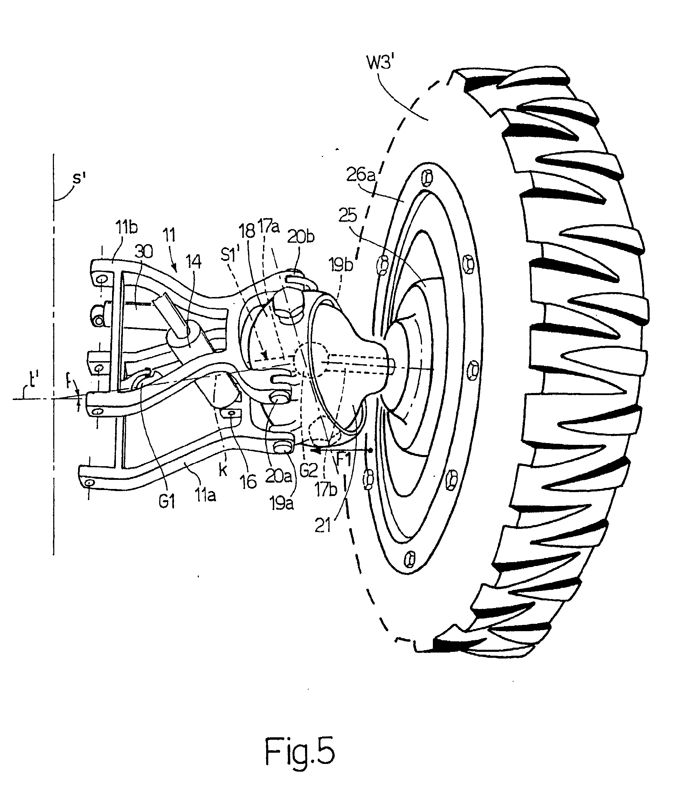

As shown in more detail in Figure 5, intermediate shaft 17a of axle shaft S1' has a longitudinal axis of symmetry (k) sloping by sweepback angle (f) with respect to the line (t') perpendicular to the longitudinal axis of symmetry (s') of the body of tractor T2.

Figures 2, 3, 5 also show a hydraulic actuator 30, the rod 31 of which is connected by an articulated joint N to an arm 32 (Figure 2) integral with hub carrier 21. The movement of rod 31 is variable in sign and magnitude, and rotates hub carrier 21, and therefore turns wheel W3', as controlled by the user operating a steering device (not shown).

As shown in more detail in Figure 3, the axis (t1) of hinges 22, 23 slopes by a so-called caster angle (δ) with respect to a line (v1) perpendicular to the ground GR.

By virtue of caster angle (δ) , the bottom of wheel W3', when turning, is closer than the top of wheel W3' to the body of tractor T2. As is known, however, the bottom of the body of tractor T2 is clear and therefore a preferential non-interference area between wheel W3' and the body of tractor T2.

Caster angle (δ) also provides for improving turning and so-called "swingback", i.e. causes wheels W3', W4' to swing back "naturally" to the straight position when the driver releases the steering wheel at the end of the turn.

In fact, if F1 (Figures 3, 4, 5) is the transverse horizontal component of the force exerted by ground GR on wheel W3' at point H1, force F1 possesses a moment with respect to caster axis (t1) Since, when turning, force F1 faces inwards of the turning circle, a moment is generated which tends to straighten wheel W3', thus producing a self-aligning effect on wheel W3', as required for approval of the steering system.

The same also applies to wheel W4'.

Caster angle (δ) is also associated, in inventive manner, with a pronounced kingpin angle (ε) (Figure 4).

As shown in Figure 4, kingpin angle (ε) can be defined as the angle between the projection of axis (t1) in a vertical plane (the sheet plane) through the axis of wheel W3', and a line (v2) lying in said plane (sheet plane) and perpendicular to ground GR.

More specifically, line (v2) may be selected to intersect the point H2 at which said projection of axis (t1) in the sheet plane intersects ground GR.

Point H1 may also be defined as the point at which the centerline (m) of wheel W3' intersects ground GR. In this context, segment H1H2 is referred to as the "ground arm" of the steering system.

The value of ground arm H1H2 is determined:
- by kingpin angle (ε);
- by the offset OFF of disk 26a, i.e. the distance between the plane π1 in which disk 26a rests on a rim 26b, and the plane π2 in which disk 26a rests on hub 25; in this case, offset OFF is also defined as the distance between plane n1 and the outermost part of rim 26b;
- by the camber (µ), i.e. the angle formed by the intersection of centerline (m) with a line perpendicular to ground GR, in particular line (v2); and
- by the general configuration of the hub carrier 21/hub 25 system (Figure 4).

As will be seen, to achieve the desired effects, in addition to self-alignment of wheels W3', W4', ground arm H1H2 must have a negative value, i.e. point H2 must be located outwards of point H1 with respect to the body of tractor T2.

Obviously, the further point H2 is from point H1, the greater kingpin angle (ε), offset OFF and camber (µ) will be.

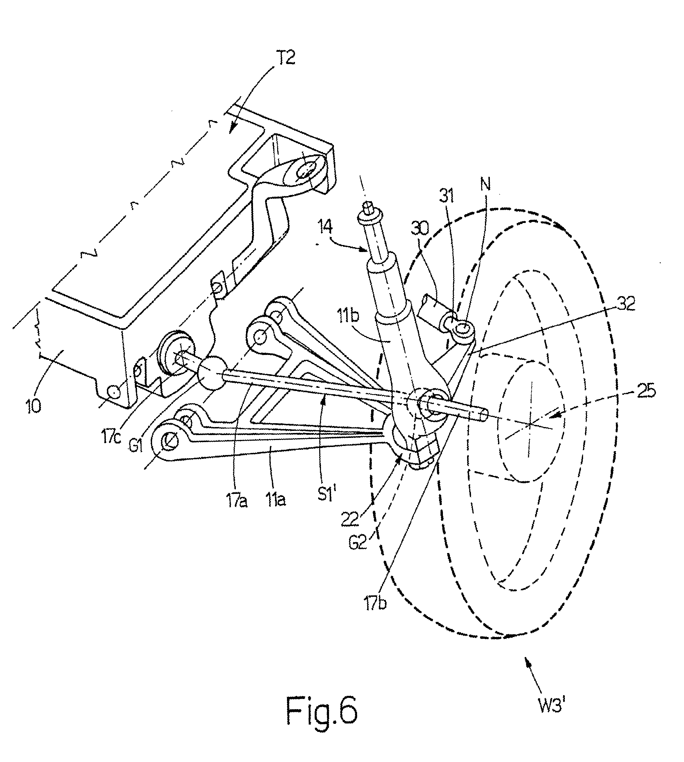

Figures 6-10 show a second embodiment of the present invention, in which the suspension is a McPherson type employing an arm connected to a bottom oscillating triangle.

The overall concept described with reference to Figures 1a-1c also applies to this embodiment.

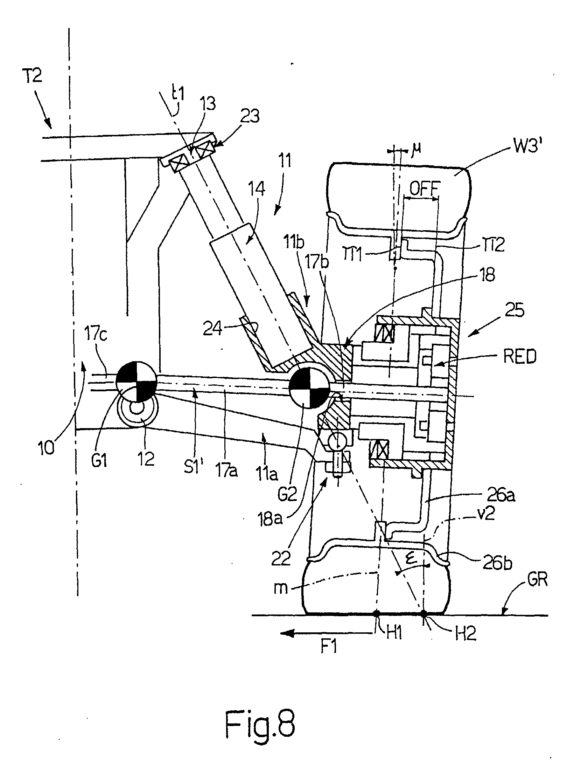

Axle shaft S1' is associated with a box body 10 (Figure 8) integral with the body of tractor T2, and to which is attached a suspension 11 comprising a bottom arm 11a and a telescopic top arm 11b.

Bottom arm 11a is hinged to box body 10 by pins 12 (Figure 8), and telescopic top arm 11b is connected to box body 10 by a pin 13 (Figure 8).

Telescopic top arm 11b comprises a telescopic hydraulic cylinder 14 which acts as a shock-absorber or, more generally, provides for varying the stiffness of suspension 11. More specifically, telescopic hydraulic cylinder 14 is connected by end pin 13 to the body of tractor T2 (Figure 8), is connected to the articulated support 18 by a strong bracket, and is connected to a hydraulic circuit (not shown) in the body of tractor T2.

Axle shaft S1' extends between arms 11a and 11b, and comprises a device having two transmission joints G1, G2 and for transmitting motion from the differential casing (not shown), housed in box body 10, to wheel W3' (see below). More specifically, axle shaft S1 comprises an intermediate shaft 17a with joints G1, G2 on the ends (Figure 8); an outer shaft 17b extending from joint G2 to transmit motion to wheel W3' (see below); and an inner shaft 17c.

Box body 10 advantageously, though not necessarily, houses a device (not shown) for braking front wheels W3', W4'.

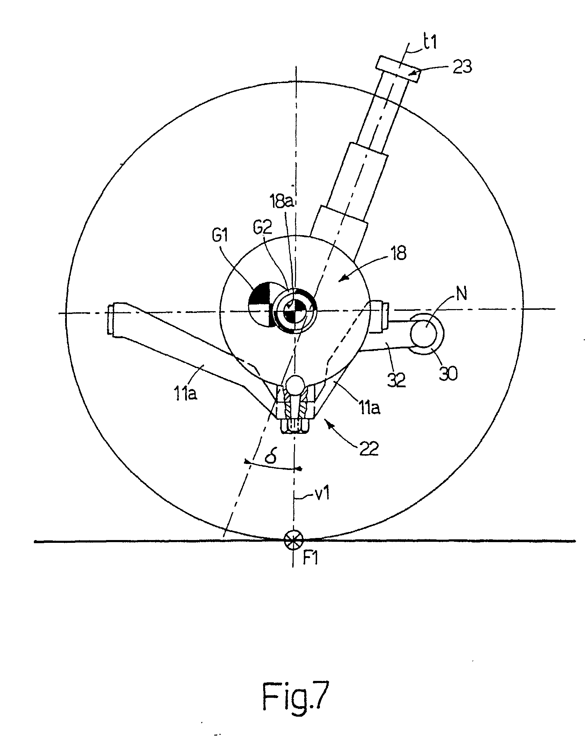

As shown in detail in Figures 6 and 7, arm 11a is advantageously triangular, and arm 11b comprises a cylindrical connecting bracket between cylinder 14 and hub carrier 19. Arms 11a and 11b therefore support the articulated support 18, which is substantially cup-shaped and has a bottom attachment for connection to arm 11a by means of an articulated head 22, and a top attachment for connection to cylinder 14 by means of a fixed bracket 24.

Pin 13 is connected to a support, forming part of box body 10, by an articulated joint 23.

Articulated support 18 is designed to support hub 25 of wheel W3' by means described in detail later on.

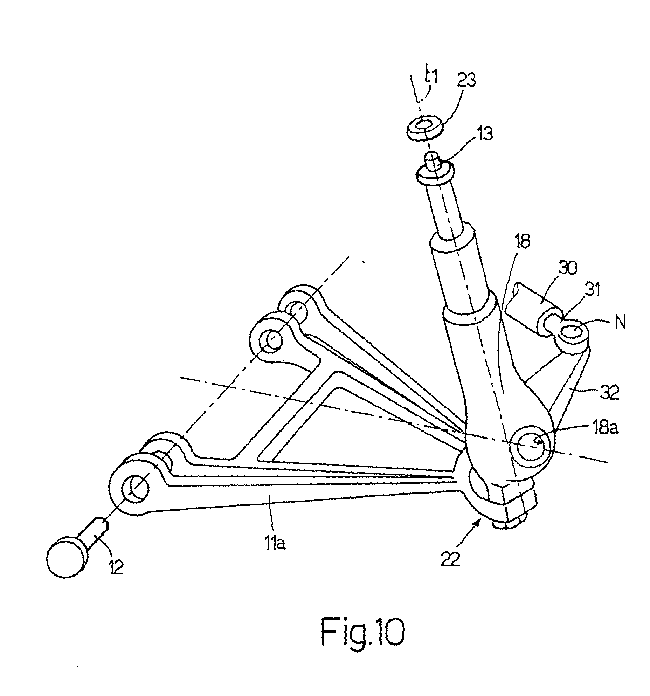

Articulated support 18 (Figure 10) therefore forms part of an articulated system defined by bottom arm 11a hinged on one side to box body 10 by pins 12, and connected on the other side by articulated head 22 to articulated support 18, in turn bracketed to cylinder 14. End pin 13 of cylinder 14 is connected by articulated joint 23 to box body 10 of tractor T2.

Suspension 11 (Figure 8) therefore allows wheel W3' to turn - by articulated support 18 rotating about axis (t1) (Figure 8) - and also to shake vertically by virtue of the characteristic of telescopic cylinder 14.

Articulated support 18 is normally cast, and, as shown in Figure 10, comprises, in the portion facing wheel W3', a through hole 18a for the passage of outer shaft 17b of axle shaft S1' which, as stated, transmits motion to wheel W3'.

For this purpose, outer shaft 17b is connected (by known means) to a hub 25, which is fitted with a disk 26a of wheel W3' (Figure 8).

A portion of outer shaft 17b extends inside hub 25, which may house the component parts of a reducer RED.

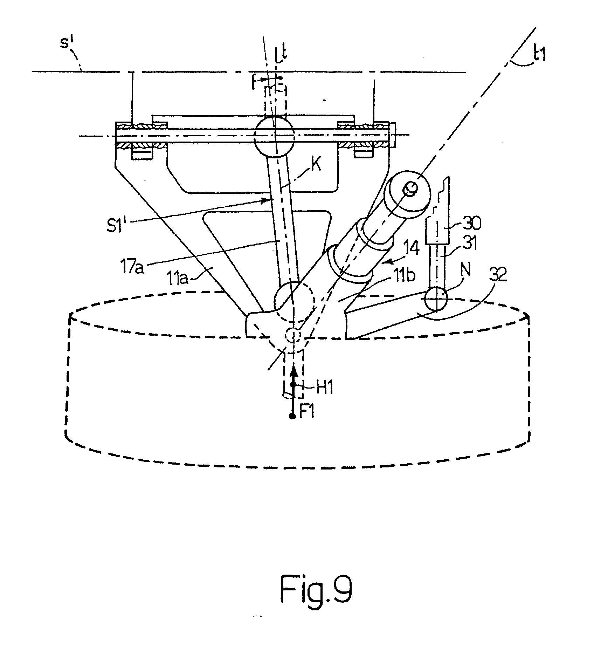

As shown in more detail in Figure 9, intermediate shaft 17a of axle shaft S1' has a longitudinal axis of symmetry (k) sloping by sweepback angle (f) with respect to the line (t') perpendicular to the longitudinal axis of symmetry (s') of the body of tractor T2.

Figures 6, 7, 9 also show a hydraulic actuator 30, the rod 31 of which is connected by an articulated joint N to an arm 32 integral with articulated support 18. The movement of rod 31 is variable in sign and magnitude, and rotates articulated support 18, and therefore turns wheel W3', as controlled by the user operating a steering device (not shown).

As shown in more detail in Figure 7, the axis (t1) of articulated joints 22, 23 slopes by a so-called caster angle (δ) with respect to a line (v1) perpendicular to the ground GR.

By virtue of caster angle (δ), the bottom of wheel W3', when turning, is closer than the top of wheel W3' to the body of tractor T2. As is known, however, the bottom of the body of tractor T2 is clear and therefore a preferential non-interference area between wheel W3' and the body of tractor T2.

Caster angle (δ) also provides for improving turning and so-called "swingback", i.e. causes wheels W3', W4' to swing back "naturally" to the straight position when the driver releases the steering wheel at the end of the turn.

In fact, if F1 (Figures 7, 9) is the transverse horizontal component of the force exerted by ground GR on wheel W3' at point H1, force F1 possesses a moment with respect to caster axis (t1). Since, when turning, force F1, for wheel W3' (Figure 1b), faces inwards of the turning circle, a moment is generated which tends to straighten wheel W3', thus producing a self-aligning effect on wheel W3', as required for approval of the steering system.

The same also applies to wheel W4'.

Caster angle (δ) is also associated, in inventive manner, with a pronounced kingpin (ε) (Figure 8).

As regards the kingpin angle (ε), reference may be made to what has already been stated relative to the first embodiment in Figures 2-6.

As shown in Figure 8, kingpin angle (ε) can be defined as the angle between the projection of axis (t1) in a vertical plane (sheet plane) through the axis of wheel W3', and a line (v2) lying in said (Figure 8) plane and perpendicular to ground GR.

More specifically, line (v2) may be selected to intersect the point H2 at which said projection of axis (t1) in the sheet plane intersects ground GR.

Point H1 may also be defined as the point at which the centerline (m) of wheel W3' intersects ground GR. In this context, segment H1H2 is referred to as the "ground arm" of the steering system.

The value of ground arm H1H2 is determined:
- by kingpin angle (ε);
- by the offset OFF of disk 26a, i.e. the distance between the plane π1 in which disk 26a rests on a rim 26b, and the outermost part of rim 26b;
- by the camber (µ), i.e. the angle formed by the intersection of centerline (m) with a line perpendicular to ground GR, in particular line (v2); and
- by the general configuration of the hub carrier 21/hub 25 system (Figure 8).

As will be seen, to achieve the desired effects, in addition to self-alignment of wheels W3', W4', ground arm H1H2 must have a negative value, i.e. point H2 must be located outwards of point H1 with respect to the body of tractor T2.

Obviously, the further point H2 is from point H1, the greater kingpin angle (ε), offset OFF and camber (µ) will be.

Therefore, by combining the effect described of caster angle (δ) and the effect of a pronounced negative ground arm H1H2, the vertical of the center of wheel W3' moves away from the body of tractor T2 when turning, so that wheel W3' does not come so close to the body of tractor T2 as in conventional configurations.

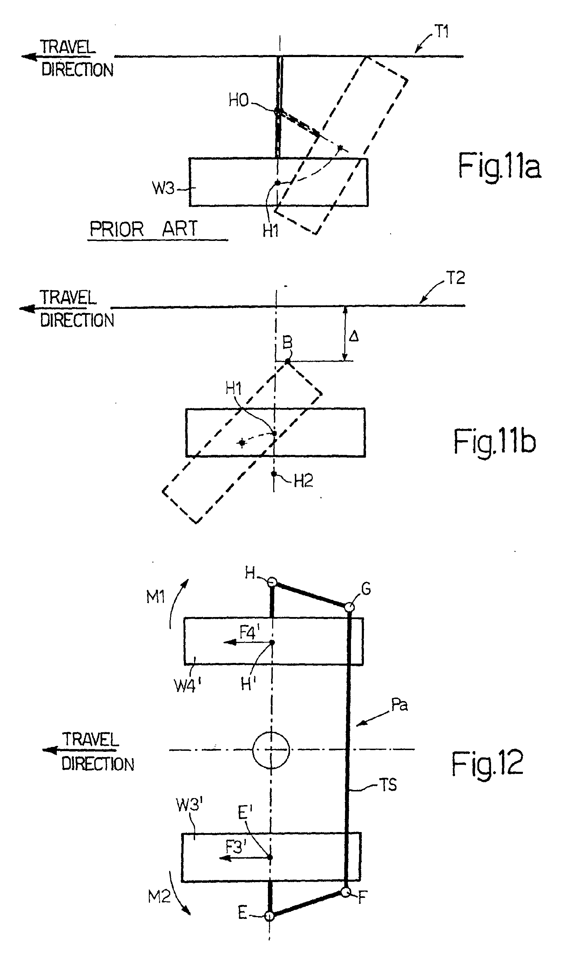

In fact, as shown in Figure 11a, a known wheel W3 turns about a point H0 lying in the centerline plane of the wheel, so that, when turned about point HO by the steering actuator (not shown in Figure 11a), wheel W3 would collide with the body of tractor T1 at point A. Conversely, with a negative ground arm H1H2, wheel W3' turns about point H2 outside the centerline plane of wheel W3' into the configuration shown in Figure 11b, in which the point on wheel W3' closest to the body of tractor T2 is point B. As can be seen, adopting a negative ground arm H1H2, the point on wheel W3' closest to the body of tractor T2 is separated from the body of tractor T2 by a given distance Δ, i.e. wheel W3' does not come so close to the body of tractor T2 when executing the tightest turn.

Distance Δ also provides for fully exploiting the turning angle obtained by adding the maximum angle (θ') permitted by the joint and sweepback angle (f), thus drastically reducing the risk of interference between wheel W3' and the body of tractor T2.

Another collateral effect of negative ground arm H1H2 is a further self-aligning phenomenon described with reference to Figure 12.

Figure 12 shows a schematic plan view of front axle Pa with a negative ground arm. Points E' and H' indicate the points at which respective wheels W3' and W4' contact ground GR; points E and H are the virtual turning points (intersections of respective axes (t') with ground GR) of wheels W3' and W4'; segments E'E and H'H are therefore the ground arms of respective wheels W3' and W4'; and F and G indicate the articulation points of the steering rod TS.

Let us suppose the front differential lock is engaged, as is normal for a tractor in heavy towing conditions.

Points H', E' of wheels W4', W3' are subjected to the forces F4', F3' exchanged between wheels W4', W3' and ground GR.

When the traction of both wheels W3', W4' on ground GR is the same, the clockwise moment M1 of force F4' and the anticlockwise moment M2 of force F3' are identical in absolute value and opposite in sign, and produce on steering rod TS a balanced compressive stress by virtue of its moments being equal in absolute value, so that no type of stress is produced on the steering gear (not shown) connected mechanically to steering rod TS.

Now let us suppose wheel W3' loses traction with respect to wheel W4'. A loss of traction by wheel W3' means a reduction in moment M2 because, for a given ground arm EE', the value of force F3' has decreased. Moment M1 generated by wheel W4' therefore becomes predominant, so that tractor T2 tends to turn right, i.e. the reaction of steering rod TS to the unbalance between moments M1, M2 is a tendency to turn right.

At tractor level, however, the loss of traction by wheel W3' is converted into a tendency of the tractor to turn left on account of the predominant forces on the right side. In a force configuration in which the right side pulls harder than the left (which has lost traction), the tractor would tend at this point to turn left, since the resisting force applied to the tractor is assumed along the centerline. The tractor would therefore turn left, but the steering device and, therefore, the driver sense a feedback signal inducing a right turn of the steering device comprising steering rod TS and all the members connected to it up to the steering wheel (not shown).

If the driver, therefore, were to release the steering wheel upon the above loss of traction, the tractor would automatically turn right simultaneously with its tendency to advance leftward. The driver, who in actual fact keeps hold of the steering wheel, is therefore induced in real time to effect a steering correction to counteract in advance the effects of the unbalance in the external force configuration.

By virtue of negative ground arms EE', HH', the tractor transmits to the driver a real-time signal indicating a forthcoming loss in directional stability, which can be counteracted directly by the driver simply responding to the incoming signal on the steering wheel, or is corrected automatically by the system if the driver should release the steering wheel.

In other words, if wheel W3' loses traction, the tractor would tend to turn left through lack of pull on the left and a predominant pull on the right, but the steering system automatically turns right, so that either the driver senses a reaction on the steering wheel inducing a right turn, or, even if the steering wheel is released, the tractor turns itself automatically to maintain direction.

The advantages of the suspended articulated axle for vehicles, in particular farm tractors, according to the present invention are as follows:
(a) reduction in the turning radius of the tractor by:
   - increasing the turning angle of the inside wheel beyond the limit imposed by the universal joint;
   - reducing the wheelbase of the tractor while preserving a convenient structure in which the front axle is secured to the structure in front of, as opposed to beneath, the engine;
(b) increasing the distance between the wheel and tractor body when turning, to prevent interference when executing tight turns;
(c) self-alignment in the event of a loss of traction with the front differential lock engaged;
(d) in the second embodiment (McPherson suspension), the possibility of implementing reliable, low-cost solutions as demanded by medium-small range tractors.

## Claims

1. A suspended articulated front axle (Pa) for vehicles (T2), in particular farm tractors (T2), comprising a central body and two axle shafts (S1' S2') extending laterally with respect to said central body; each axle shaft (S1', S2') being associated with a respective front wheel (W3', W4');
the suspended articulated front axle (Pa) being **characterized in that** each axle shaft (S1' S2') comprises at least one portion (17a) whose longitudinal axis of symmetry (k) slopes by a sweepback angle (f) with respect to a line (t') perpendicular to a longitudinal axis of symmetry (s') of the vehicle (T2); said sweepback angle (f) being such that the outer end of the sloping said portion (17a) is located further back than the inner end of said portion (17a) in the common forward traveling direction of the vehicle (T2).

2. A suspended articulated front axle (Pa) for vehicles (T2), as claimed in Claim 1, **characterized in that** said sweepback angle (f) produces a twofold reduction in turning radius:
- a first reduction by reducing the wheelbase from a value (WB1) to a value (WB2), so that the turning radius goes from a value (R1) to a value (R2); and
- a second reduction whereby the turning radius goes from value (R2) to a lower value (R2');
so that the turning angle of the inside wheel (W3') in the turn goes from a value (θ') to a value (θ'+f).

3. A suspended articulated front axle (Pa) for vehicles (T2), as claimed in Claim 2, **characterized in that** said sweepback angle (f) assumes a maximum value of (α'/2).

4. A suspended articulated front axle (Pa) for vehicles (T2), as claimed in any one of the foregoing Claims, **characterized in that** said portion (17a) sloping by a sweepback angle (f) comprises an intermediate shaft (17a) of said axle shaft (S1'/ S2').

5. A suspended articulated front axle (Pa) for vehicles (T2), as claimed in Claim 4, **characterized in that** said intermediate shaft (17a) is connected at one end to an inner shaft (17c) by a first joint (G1), and at the other end to an outer shaft (17b) by a second joint (G2).

6. A suspended articulated front axle (Pa) for vehicles (T2), as claimed in Claim 5, **characterized in that** said joints (G1, G2) are universal joints.

7. A suspended articulated front axle (Pa) for vehicles (T2), as claimed in any one of the foregoing Claims, **characterized in that** each axle shaft (S1', S2') is associated with a suspension (11) comprising a bottom arm (11a) and a top arm (11b), both of which are advantageously in the form of a double fork and support a respective cup-shaped articulated support (18).

8. A suspended articulated front axle (Pa) for vehicles (T2), as claimed in Claim 7, **characterized in that** said articulated support (18) is designed to house a hub carrier (21) in turn supporting a hub (25).

9. A suspended articulated front axle (Pa) for vehicles (T2), as claimed in Claim 8, **characterized in that** the bottom arm (11a) is hinged to a hydraulic cylinder (14) for varying the stiffness of the suspension (11) as a whole.

10. A suspended articulated front axle (Pa) for vehicles (T2), as claimed in any one of Claims 1 to 6, **characterized in that** each said axle shaft (S1', S2') is associated with a suspension (11) comprising a bottom arm (11a) and a telescopic top arm (11b).

11. A suspended articulated front axle (Pa) for vehicles (T2), as claimed in Claim 10, **characterized by** comprising a McPherson suspension.

12. A suspended articulated front axle (Pa) for vehicles (T2), as claimed in any one of the foregoing Claims, **characterized by** comprising a central body and two axle shafts (S1' S2') extending laterally with respect to said central body; each axle shaft (S1' S2') being associated with a respective front wheel (W3', W4');
suspended articulated front axle (Pa) wherein:
- the kingpin angle value (ε),
- the offset value (OFF),
- the camber value (µ), and
- the general configuration of the hub carrier/hub system (21, 25),
with respect to each axle shaft (S1' S2') are such as to give a respective negative ground arm (H1H2).

13. A suspended articulated front axle (Pa) for vehicles (T2), in particular farm tractors (T2), comprising a central body and two axle shafts (S1' S2') extending laterally with respect to said central body; each axle shaft (S1' S2') being associated with a respective front wheel (W3', W4');
the suspended articulated front axle (Pa) being **characterized in that**:
- the kingpin angle value (ε),
- the offset value (OFF),
- the camber value (µ), and
- the general configuration of the hub carrier/hub system (21, 25),
with respect to each axle shaft (S1' S2') are such as to give a respective negative ground arm (H1H2).

14. A suspended articulated front axle (Pa) for vehicles (T2), as claimed in Claim 13, **characterized in that** each front wheel (W3', W4') has a respective negative ground arm (EE', HH') so that, in the event of either of the front wheel
s (W3', W4') losing traction, a correction is made on the steering wheel to counteract the change in direction produced by the loss in traction.

15. A suspended articulated front axle (Pa) for vehicles (T2), as claimed in Claim 14, **characterized in that** the loss in traction is converted into a signal on the steering wheel, such as to induce manual user correction of the direction of the vehicle (T2).

16. A suspended articulated front axle (Pa) for vehicles (T2), as claimed in Claim 14, **characterized in that** the loss in traction is converted into a signal on the steering wheel, such as to induce automatic correction of the direction of the vehicle (T2).
